# EUROPÄISCHE PATENTSCHRIFT

(11) **EP 2 037 161 B1**
(45) Veröffentlichungstag und Bekanntmachung des Hinweises auf die Patenterteilung: **20.04.2011**
(21) Anmeldenummer: 07018197.9
(22) Anmeldetag: 17.09.2007
(51) Int. Cl.: F16J 15/32, F16L 41/00

(54) **Dichtung mit integriertem Sensor und Dichtungsanordnung mit dieser Dichtung**
Seal with integrated sensor and seal assembly with such a seal
Joint doté d'un capteur intégré et agencement de joint doté de ce joint

(43) Veröffentlichungstag der Anmeldung: 18.03.2009
(73) Patentinhaber: Carl Freudenberg KG, 69469 Weinheim (DE)
(72) Erfinder: Lauer, Frank, 69168 Wiesloch (DE); Röhner, Gerhard, 69502 Hemsbach (DE); Unger, Hans, 69518 Abtsteinach (DE); Jakob, Ernst, 64668 Rimbach (DE); Ziegler, Günter, 68259 Mannheim (DE)

(56) Entgegenhaltungen:
- EP-A- 1 593 886
- EP-A- 1 653 096

## Beschreibung

### Technisches Gebiet

Die Erfindung betrifft ein Steckstück und eine Dichtungsanordnung mit einem solchem Steckstück, umfassend einen hülsenförmigen Stützkörper aus zähhartem Werkstoff und einen Dichtkörper aus gummielastischem Werkstoff, der den Stützkörper zumindest teilweise umschließt.

### Stand der Technik

Eine Dichtungsanordnung ist aus der EP 1 593 886 A1 bekannt. Die Dichtungsanordnung umfasst eine Dichtung mit einer Dichtlippe und eine Sensoreinrichtung mit einer in einen abzudichtenden Raum ragenden Messzunge, wobei die Messzunge während der bestimmungsgemäßen Verwendung mit dem abzudichtenden Medium beaufschlagbar ist. Die Messzunge ist als Meßwertgeber zur Erfassung des Alters des abzudichtenden Mediums, der Temperatur und/oder des Drucks und/oder der Füllmenge des abzudichtenden Mediums ausgebildet.

Eine weitere Dichtung, die als Kassettendichtung ausgebildet ist, ist aus der EP 1 653 096 A1 bekannt. Die Dichtung gelangt zur Abdichtung eines Wälzlagers zur Anwendung, wobei in die Dichtung ein Drehzahlsensor integriert ist. Der Drehzahlsensor ist in einem Gehäuse angeordnet und signalleitend mit einer Auswert-Elektronik verbunden. Das Gehäuse des Drehzahlsensors durchdringt den Stützkörper der Dichtung, der aus einem metallischen Werkstoff besteht und der radial innenseitig mit den Dichtlippen aus elastomerem Werkstoff verbunden ist. Die Dichtlippen berühren Dichtflächen eines Laufrings, der auf dem Innenring des Wälzlagers aufgepresst ist. Der Stützkörper und der Drehzahlsensor sind demgegenüber in den Außenring des Wälzlagers eingepresst.
Das Gehäuse des Sensors kann aus einem Kunststoff bestehen, wobei eine Dicht-Packung zwischen dem Stützkörper und dem Gehäuse des Sensors angeordnet ist, um zu verhindern, dass Verunreinigungen aus der Umgebung am Gehäuse des Sensors und am Stützkörper entlang ins Innere des Wälzlagers eindringen.

Steckstücke und Dichtungsanordnungen mit Steckstücken sind allgemein bekannt, wobei die Steckstücke benachbart zueinander angeordnete Gehäuseteile, wie beispielsweise einen Motorblock und ein Getriebe eines Kraftfahrzeugs, flüssigkeitsdicht miteinander verbinden (Siehe z.B. DE-C-10117731). Für viele Anwendungsfälle ist es erforderlich, in der Peripherie der Steckstücke Sensoren vorzusehen, die beispielsweise Temperaturen und/oder Drücke in abzudichtenden Maschinenelementen detektieren. Solche Sensoren sind in Haltern an den Gehäusen der Maschinenelemente angeordnet. Die Befestigung der Halter am Gehäuse erfolgt meist durch Aufnahmebohrungen im Gehäuse, wobei die Halter in die Aufnahmebohrungen eingeschraubt sind. In fertigungstechnischer und wirtschaftlicher Hinsicht ist dies nachteilig.

### Darstellung der Erfindung

Der Erfindung liegt die Aufgabe zu Grunde, ein Steckstück und eine Dichtungsanordnung damit derart weiterzuentwickeln, dass das erfindungsgemäße Steckstück und die erfindungsgemäße Dichtungsanordnung damit eine einfache und kostengünstige Detektierung interessierender Messwerte ermöglicht, bei zusätzlicher Abdichtung des Übergangsbereichs vom Stützkörper zum Aufnahmerohr, in dem der Sensor angeordnet ist.

Diese Aufgabe wird erfindungsgemäß mit den Merkmalen der Ansprüche 1 und 11 gelöst. Auf vorteilhafte Ausgestaltungen nehmen die darauf jeweils rückbezogenen Unteransprüchen Bezug.

Zur Lösung der Aufgabe ist ein Steckstück mit integriertem Sensor vorgesehen, umfassend einen hülsenförmigen Stützkörper aus zähhartem Werkstoff und einen Dichtkörper aus gummielastischem Werkstoff, der den Stützkörper zumindest teilweise umschließt, wobei der Stützkörper mit einem seine Wandung durchdringenden Aufnahmerohr für den Sensor verbunden ist, wobei das Aufnahmerohr vom Dichtkörper form- oder stoffschlüssig dichtend umschlossen ist.

Steckstücke werden verwendet, um benachbart zueinander angeordnete Maschinenelemente, wie beispielsweise Getriebe und Motor eines Kraftfahrzeugs, dichtend miteinander zu verbinden. Das Steckstück verbindet die Gehäuse der zueinander benachbarten Maschinenelemente. Der Stützkörper wird dabei zum Beispiel von abzudichtendem Medium durchströmt. Das Aufnahmerohr ragt in das Innere des Steckstücks, um Messwerte, wie beispielsweise die Temperatur des durchströmenden Mediums und/oder den Druck im Inneren des Steckstücks, aufzunehmen.

Die Dichtungsanordnung umfasst ein Steckstück wie zuvor beschrieben, wobei das Steckstück Gehäuseteile dichtend miteinander verbindet und wobei das Steckstück einen hülsenförmigen Stützkörper aufweist, der außenumfangsseitig von dem Dichtkörper ummantelt ist, wobei der Dichtkörper im Bereich seiner beiden Stirnseiten jeweils einen Dichtwulst aufweist.
Hierbei ist von Vorteil, dass das Steckstück einen integrierten Sensor aufweist. Das Steckstück und der Sensor bilden eine vormontierbare Einheit. Im Vergleich zur Montage von einem separaten Sensor und zusätzlich von einem Steckstück ohne integrierten Sensor, ist die Montage insgesamt wesentlich vereinfacht und die Gefahr von Montagefehlern ist auf ein Minimum begrenzt. Kostenaufwändiger

Verbindungen von Sensorhalter und Gehäusen von Maschinenelementen, beispielsweise Schraubverbindungen, bedarf es nicht.
Das Aufnahmerohr für den Sensor durchdringt die Wandung des Stützkörpers und endet, im montierten und gebrauchsfertigen Zustand, in dem abzudichtenden Raum, in dem die Messwerte detektiert werden können.

Das Aufnahmerohr ist vom Dichtkörper form- oder stoffschlüssig dichtend umschlossen. Hierbei ist von Vorteil, dass der Übergangsbereich vom Stützkörper zum Aufnahmerohr zusätzlich abgedichtet ist.

Das Aufnahmerohr kann einen als Positionierungshilfe ausgebildeten Bund aufweisen, der kreisringförmig ausgebildet ist und den Stützkörper außenumfangsseitig dichtend umschließt.

Der Bund und der an den Bund anschließende untere Teil des Aufnahmerohrs, der radial außerhalb der Stützkörpers angeordnet ist, kann vom elastormeren Werkstoff des Dichtkörpers umschlossen sein.

Der Stützkörper und das Aufnahmerohr können stoffschlüssig miteinander verbunden sein.
Die stoffschlüssige Verbindung kann beispielsweise dadurch erfolgen, dass das Aufnahmerohr in den Stützkörper eingeschweißt ist. Hierbei ist von Vorteil, dass diese Verbindung während der gesamten Gebrauchsdauer absolut dicht ist.

Nach einer anderen Ausgestaltung können der Stützkörper und das Aufnahmerohr kraft- und/oder formschlüssig miteinander verbunden sein. Kraft- und/oder formschlüssige Verbindungen haben den Vorteil, dass das Aufnahmerohr und der Stützkörper zerstörungsfrei lösbar voneinander getrennt werden können. Dies ist insbesondere dann von Vorteil, wenn das Aufnahmerohr und der Sensor eine vormontierte Einheit bilden und während der Gebrauchsdauer der Dichtung/Dichtungsanordnung, beispielsweise aufgrund eines Defekts, ausgetauscht werden müssten.

Der Stützkörper und/oder das Aufnahmerohr können aus einem metallischen oder polymeren Werkstoff bestehen. Insbesondere für die Ausführung "stoffschlüssige Verbindungen zwischen Stützkörper und Aufnahmerohr" ist es sinnvoll, wenn diese beiden miteinander zu verbindenden Bauteile materialeinheitlich ausgebildet sind.

Werden diese Bauteile demgegenüber kraft- und/oder formschlüssig miteinander verbunden, kann beispielsweise der Stützkörper aus einem metallischen Werkstoff bestehen, das Aufnahmerohr demgegenüber aus einem polymeren Werkstoff. Das Aufnahmerohr kann mit einer integrierten Dichtung versehen sein, um den Übergangsbereich zwischen dem Stützkörper und dem Aufnahmerohr dichtend zu verschließen.

Der Sensor kann kraft- und/oder formschlüssig im Aufnahmerohr angeordnet sein. Dadurch kann eine einfache Anpassung des Sensors an die jeweiligen Gegebenheiten des Anwendungsfalls erfolgen. Es besteht die Möglichkeit, ein und dasselbe Steckstück einzusetzen, wobei abhängig vom Anwendungsfall entweder ein Temperatursensor, ein Drucksensor oder andere Messwertaufnehmer innerhalb des Aufnahmerohrs montiert werden können. Auch können Sensoren für unterschiedliche Messbereiche, abhängig vom Anwendungsfall, in das Aufnahmerohr eingesetzt werden. Durch dieses Baukastensystem ist eine einfache und kostengünstige Anpassung des Steckstücks an den jeweiligen Anwendungsfall gewährleistet.

Als Sensor können Druck- und/oder Temperatursensoren zur Anwendung gelangen.

Je nach verwendetem Sensor und abhängig vom zu detektierenden Messwert, kann das Aufnahmerohr im Inneren des Steckstücks stirnseitig offen oder dicht verschlossen sein.

Der Dichtwulst im Bereich der beiden Stirnseiten des Dichtkörpers kann, im Längsschnitt betrachtet, radial nach außen oder innen gewölbt ausgebildet sein.

In axialer Richtung zwischen den Dichtwulsten kann ein radial nach außen ragendes Aufnahmerohr angeordnet sein. Die Dichtwulste sind üblicherweise in Bohrungen von einander benachbarten Gehäusen dichtend angeordnet. Das Aufnahmerohr befindet sich dann in dem durch den Abstand zwischen den Gehäusen gebildeten Spalt.

### Kurzbeschreibung der Zeichnung

Nachfolgend werden zwei Ausführungsbeispiele anhand der Figuren 1 bis 4 näher erläutert. Diese zeigen:
Figuren 1 und 2 ein erstes Ausführungsbeispiel der erfindungsgemäßen Dichtungsanordnung mit dem erfindungsgemäßen Steckstück, wobei der Sensor als Temperatursensor ausgebildet ist,
Figuren 3 und 4 ein zweites Ausführungsbeispiel der erfindungsgemäßen Dichtungsanordnung mit dem erfindungsgemäßen Steckstück, wobei der Sensor als Drucksensor ausgebildet ist,

### Ausführung der Erfindung

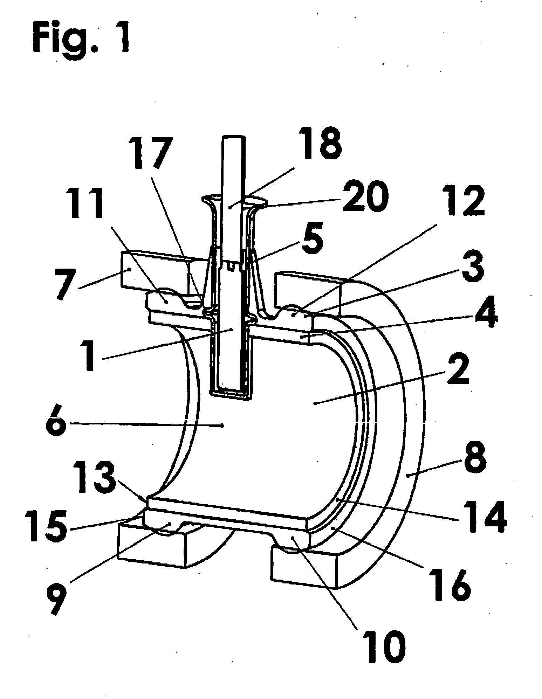

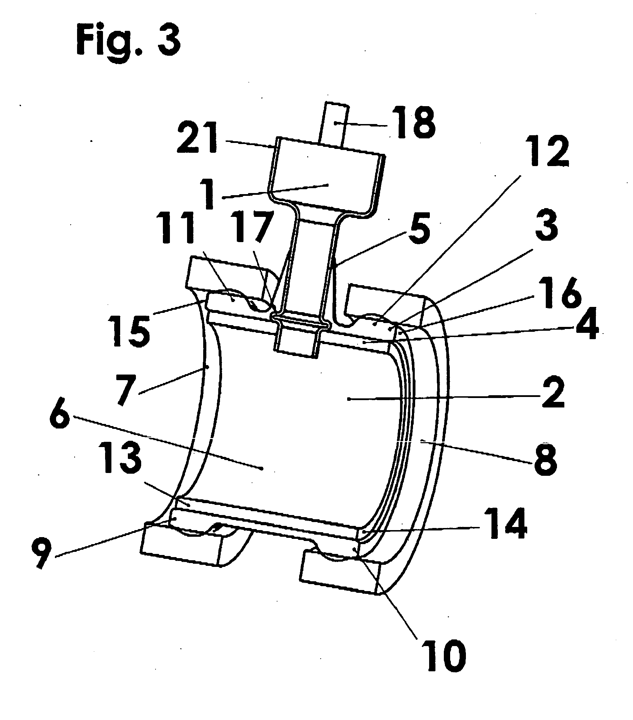

In den Figuren 1 bis 4 sind zwei Ausführungsbeispiele von Steckstücken 6 **/** Dichtungsanordnungen damit gezeigt. In jedem der Ausführungsbeispiele ist ein Steckstück 6 gezeigt, das einen Stützkörper 2 aus einem zähhartem Werkstoff umfasst. In den hier gezeigten Ausführungsbeispielen besteht der Stützkörper 2 aus einem metallischen Werkstoff; abweichend davon kann jedoch auch ein polymeren Werkstoff zur Anwendung gelangen.
Der Dichtkörper 3 besteht in dem gezeigten Ausführungsbeispiel jeweils aus einem elastomeren Werkstoff, der den Stützkörper 2 außenumfangsseitig vollständig umschließt. Die Stirnseiten 13,14 des Stützkörpers 2 sind jeweils frei von elastomerem Werkstoff des Dichtkörpers 3; wie in den Figuren 1 und 3 gezeigt, ragt der elastomere Werkstoff des Dichtkörpers 3 stirnseitig beiderseits in axialer Richtung jeweils mit seinen beiden Stirnseiten 15,16 über die Stirnseiten 13,14 des Stützkörpers 2.
In jedem der Ausführungsbeispiele weist das Steckstück 6 einen integrierten Sensor 1 auf. Das Steckstück 6 ist in den beiden gezeigten Ausführungsbeispielen zwischen zwei schematisch dargestellten und gegeneinander abzudichtenden Gehäuseteilen 7, 8 angeordnet. Der Dichtkörper 3 weist im Bereich seiner beiden Stirnseiten 15,16 jeweils einen Dichtwulst 11,12 auf, wobei jeder Dichtwulst 11,12 radial nach außen gewölbt ausgebildet ist. In axialer Richtung zwischen den Dichtwulsten 11,12 springt das Aufnahmerohr 5 für den Sensor 1 radial nach außen vor.

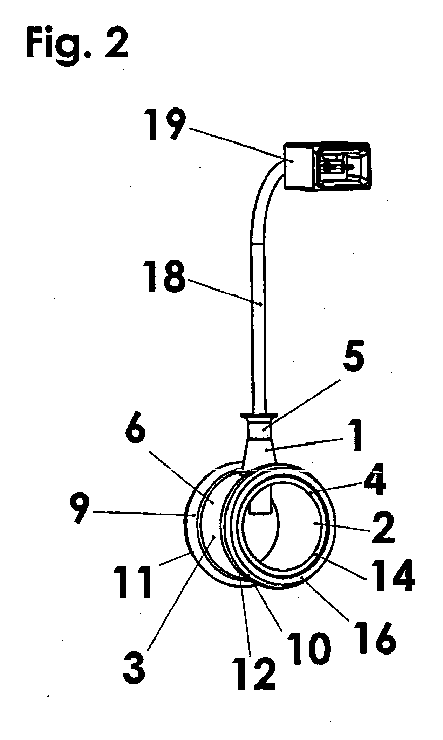

In Figur 1 ist das erste Ausführungsbeispiel des Steckstücks 6 / der Dichtungsanordnung damit in einem Längsschnitt gezeigt; in Figur 2 ist das Steckstück 6 / die Dichtungsanordnung damit in einer Ansicht dargestellt. Der Sensor 1 ist als Temperatursensor ausgebildet und im Aufnahmerohr 5 angeordnet.
Das Aufnahmerohr 5 besteht ebenso, wie der Stützkörper 2, aus einem metallischen Werkstoff und ist stoffschlüssig mit diesem verbunden. Die Verbindung ist durch eine Schweißverbindung gebildet.
Das Aufnahmerohr 5 ist innerhalb des Steckstücks 6 stirnseitig verschlossen, so dass der Temperatursensor vor einer Beaufschlagung mit abzudichtendem Medium geschützt ist.

Um eine korrekte Position des Aufnahmerohrs 5 im Steckstück 6 sicherzustellen, weist das Aufnahmerohr 5 einen Bund 17 auf, der kreisringförmig ausgebildet ist und den Stützkörper 2 außenumfangsseitig anliegend berührt. Sowohl der Bund 17 als auch der untere Teil des Aufnahmerohrs 5, der radial außerhalb des Stützkörpers 2 angeordnet ist, sind von elastomerem Werkstoff des Dichtkörpers 3 umschlossen. Der obere Teil des Aufnahmerohrs 5, aus dem die Kabel 18 in Richtung eines Steckers 19 geführt sind, ist mit einem Verschlussstopfen 20 verschlossen.

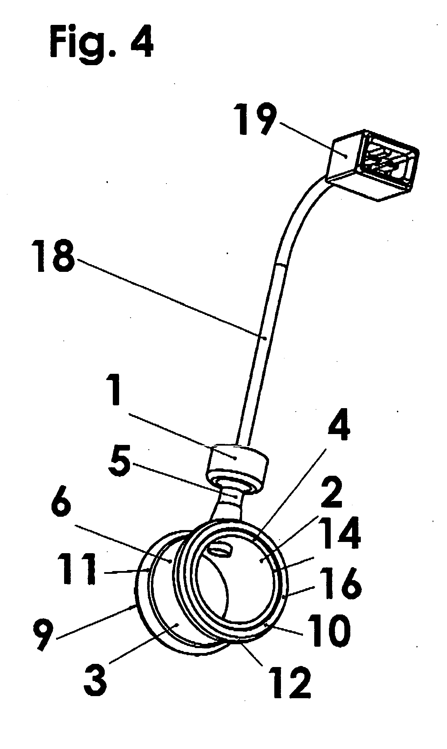

In Figur 3 ist das zweite Ausführungsbeispiel des Steckstücks 6 / der Dichtungsanordnung damit in einem Längsschnitt gezeigt; in Figur 4 ist das Steckstück 6 / die Dichtungsanordnung damit in einer Ansicht dargestellt.
Der Sensor 1 ist als Drucksensor ausgebildet und im Aufnahmerohr 5 angeordnet. Stirnseitig einerseits durchdringt das Aufnahmerohr 5 die Wandung 4 des Stützkörpers 2. Stirnseitig andererseits weist das Aufnahmerohr 5 eine trichterförmige Erweiterung 21 auf, in der der Drucksensor angeordnet ist. Im Gegensatz zum Ausführungsbeispiel aus den Figuren 1 und 2 ist das Aufnahmerohr auf der der Erweiterung 21 axial abgewandten Stirnseite offen, so dass der Drucksensor mit dem innerhalb des Steckstücks 6 wirksamen Druck beaufschlagbar ist.
Ähnlich wie im Ausführungsbeispiel gemäß Figuren 1 und 2, schließt sich an den Sensor 1 ein Kabel 18 an, das in einem Stecker 19 mündet.

Abweichend von den hier dargestellten Ausführungsbeispielen besteht die Möglichkeit, den Stecker 19 ohne ein Kabel direkt mit dem Aufnahmerohr 5 zu verbinden.

## Patentansprüche

1. Steckstück mit integriertem Sensor (1), umfassend einen hülsenförmigen Stützkörper (2) aus zähhartem Werkstoff **dadurch gekennzeichnet, daß** ein Dichtkörper (3) aus gummielastischem Werkstoff den Stützkörper (2) zumindest teilweise umschließt, wobei der Stützkörper (2) mit einem seine Wandung (4) durchdringenden Aufnahmerohr (5) für den Sensor (1) verbunden ist, wobei das Aufnahmerohr (5) vom Dichtkörper (3) form- oder stoffschlüssig dichtend umschlossen ist.

2. Steckstück nach Anspruch 1, **dadurch gekennzeichnet, dass** das Aufnahmerohr (5) einen als Positionierungshilfe ausgebildeten Bund (17) aufweist, der kreisringförmig ausgebildet ist und den Stützkörper (2) außenumfangsseitig dichtend umschließt.

3. Steckstück nach Anspruch 2, **dadurch gekennzeichnet, dass** der Bund (17) und der an den Bund (17) anschließende untere Teil des Aufnahmerohrs (5), der radial außerhalb des Stützkörpers (2) angeordnet ist, vom elastormeren Werkstoff des Dichtkörpers (3) umschlossen sind.

4. Steckstück nach einem der Ansprüche 1 bis 3, **dadurch gekennzeichnet, dass** der Stützkörper (2) und das Aufnahmerohr (5) stoffschlüssig miteinander verbunden sind.

5. Steckstück nach einem der Ansprüche 1 bis 4, **dadurch gekennzeichnet, dass** das Aufnahmerohr (5) in den Stützkörper (2) eingeschweißt ist.

6. Steckstück nach einem der Ansprüche 1 bis 3, **dadurch gekennzeichnet, dass** der Stützkörper (2) und das Aufnahmerohr (5) kraft- und/oder formschlüssig miteinander verbunden sind.

7. Steckstück nach einem der Ansprüche 1 bis 6, **dadurch gekennzeichnet, dass** der Stützkörper (2) und/oder das Aufnahmerohr (5) aus einem metallischen oder polymeren Werkstoff bestehen.

8. Steckstück nach einem der Ansprüche 1 bis 7, **dadurch gekennzeichnet, dass** der Sensor (1) kraft- und/oder formschlüssig im Aufnahmerohr (5) angeordnet ist.

9. Steckstück nach einem der Ansprüche 1 bis 8, **dadurch gekennzeichnet, dass** der Sensor (1) als Druck- und/oder Temperatursensor ausgebildet ist.

10. Steckstück nach einem der Ansprüche 7 bis 9, **dadurch gekennzeichnet, dass** das im Stützkörper (2) angeordnete stirnseitig Ende des Aufnahmerohrs (5) offen oder verschlossenen ist.

11. Dichtungsanordnung, umfassend ein Steckstück nach einem der Ansprüche 1 bis 10 und zwei gegeneinander abzudichtende Gehäuseteile (7, 8), die durch das Steckstück dichtend miteinander verbunden sind, wobei das Steckstück (6) einen hülsenförmigen Stützkörper (2) aufweist, der außenumfangsseitig von dem Dichtkörper (3) ummantelt ist, wobei der Dichtkörper (3) im Bereich seiner beiden Stirnseiten (9, 10) jeweils einen Dichtwulst (11, 12) aufweist.

12. Dichtungsanordnung nach Anspruch 11, **dadurch gekennzeichnet, dass** jeder Dichtwulst (11,12), im Längsschnitt betrachtet, radial nach außen oder innen gewölbt ausgebildet ist.

13. Dichtungsanordnung nach einem der Ansprüche 11 oder 12, **dadurch gekennzeichnet, dass** in axialer Richtung zwischen den Dichtwulsten (11, 12) ein radial nach außen ragendes Aufnahmerohr (5) angeordnet ist.

## Claims

1. Push-in piece with integrated sensor (1), comprising a sleeve-shaped supporting body (2) made of a tough material, **characterized in that** a sealing body (3) made of an elastomeric material at least partly encloses the supporting body (2), wherein the supporting body (2) is connected to an accommodating tube (5) for the sensor (1), said accommodating tube (5) passing through the wall (4) of said supporting body (2), wherein the accommodating tube (5) is sealingly enclosed by the sealing body (3) in a positive-locking or integral manner.

2. Push-in piece according to Claim 1, **characterized in that** the accommodating tube (5) has a collar (17) which is designed as a positioning aid and which is of annular configuration and sealingly encloses the supporting body (2) at the outer circumference.

3. Push-in piece according to Claim 2, **characterized in that** the collar (17) and the bottom part of the accommodating tube (5), said bottom part adjoining the collar (17) and being arranged radially outside the supporting body (2), are enclosed by the elastomeric material of the sealing body (3).

4. Push-in piece according to one of Claims 1 to 3, **characterized in that** the supporting body (2) and the accommodating tube (5) are connected to one another in an integral manner.

5. Push-in piece according to one of Claims 1 to 4, **characterized in that** the accommodating tube (5) is welded into the supporting body (2).

6. Push-in piece according to one of Claims 1 to 3, **characterized in that** the supporting body (2) and the accommodating tube (5) are connected to one another in a frictional and/or positive-locking manner.

7. Push-in piece according to one of Claims 1 to 6, **characterized in that** the supporting body (2) and/or the accommodating body (5) are made of a metallic or a polymer material.

8. Push-in piece according to one of Claims 1 to 7, **characterized in that** the sensor (1) is arranged in the accommodating tube (5) in a frictional and/or positive-locking manner.

9. Push-in piece according to one of Claims 1 to 8, **characterized in that** the sensor (1) is designed as a pressure and/or temperature sensor.

10. Push-in piece according to one of Claims 7 to 9, **characterized in that** that end face of the accommodating tube (5) which is arranged in the supporting body (2) is open or closed.

11. Seal assembly, comprising a push-in piece according to one of Claims 1 to 10 and two housing parts (7, 8) which are to be sealed relative to one another and are sealingly connected to one another by the push-in piece, wherein the push-in piece (6) has a sleeve-shaped supporting body (2) which is encased by the sealing body (3) at the outer circumference, wherein the sealing body (3) has a respective sealing bead (11, 12) in the region of its two end faces (9, 10).

12. Seal assembly according to Claim 11, **characterized in that** each sealing bead (11, 12), as viewed in longitudinal section, is designed so as to be arched radially outwards or inwards.

13. Seal assembly according to either of Claims 11 and 12, **characterized in that** an accommodating tube (5) projecting radially outwards is arranged in the axial direction between the sealing beads (11, 12).

## Revendications

1. Pièce enfichable avec capteur intégré (1), comprenant un corps de support en forme de douille (2) en matériau rigide, **caractérisée en ce qu'**un corps d'étanchéité (3) en matériau ayant l'élasticité du caoutchouc entoure au moins en partie le corps de support (2), le corps de support (2) étant connecté à un tube de réception (5) pour le capteur (1) traversant sa paroi (4), le tube de réception (5) étant entouré hermétiquement par engagement par coopération de forme ou par liaison de matière par le corps d'étanchéité (3).

2. Pièce enfichable selon la revendication 1, **caractérisée en ce que** le tube de réception (5) présente un épaulement (17) réalisé sous forme d'auxiliaire de positionnement, qui est réalisé sous forme de bague circulaire et qui entoure hermétiquement le corps de support (2) du côté de sa périphérie extérieure.

3. Pièce enfichable selon la revendication 2, **caractérisée en ce que** l'épaulement (17) et la partie inférieure du tube de réception (5) se raccordant à l'épaulement (17), qui est disposée radialement à l'extérieur du corps de support (2), sont entourés par le matériau élastomère du corps d'étanchéité (3).

4. Pièce enfichable selon l'une quelconque des revendications 1 à 3, **caractérisée en ce que** le corps de support (2) et le tube de réception (5) sont connectés l'un à l'autre par engagement par liaison de matière.

5. Pièce enfichable selon l'une quelconque des revendications 1 à 4, **caractérisée en ce que** le tube de réception (5) est soudé à l'intérieur du corps de support (2).

6. Pièce enfichable selon l'une quelconque des revendications 1 à 3, **caractérisée en ce que** le corps de support (2) et le tube de réception (5) sont connectés l'un à l'autre par engagement par force et/ou par coopération de forme.

7. Pièce enfichable selon l'une quelconque des revendications 1 à 6, **caractérisée en ce que** le corps de support (2) et/ou le tube de réception (5) se composent d'un matériau métallique ou polymère.

8. Pièce enfichable selon l'une quelconque des revendications 1 à 7, **caractérisée en ce que** le capteur (1) est disposé dans le tube de réception (5) par engagement par force et/ou par coopération de forme.

9. Pièce enfichable selon l'une quelconque des revendications 1 à 8, **caractérisée en ce que** le capteur (1) est réalisé sous forme de capteur de pression et/ou de température.

10. Pièce enfichable selon l'une quelconque des revendications 7 à 9, **caractérisée en ce que** l'extrémité frontale du tube de réception (5) disposée dans le corps de support (2) est ouverte ou fermée.

11. Agencement d'étanchéité, comprenant une pièce enfichable selon l'une quelconque des revendications 1 à 10, et deux parties de boîtier (7, 8) devant être rendues étanches l'une par rapport à l'autre, qui sont connectées de manière hermétique l'une à l'autre par la pièce enfichable, la pièce enfichable (6) présentant un corps de support en forme de douille (2) qui est enveloppé du côté de sa périphérie extérieure par le corps d'étanchéité (3), le corps d'étanchéité (3) présentant dans la région de ses deux côtés frontaux (9, 10) à chaque fois un bourrelet d'étanchéité (11, 12).

12. Agencement d'étanchéité selon la revendication 11, **caractérisé en ce que** chaque bourrelet d'étanchéité (11, 12), considéré en coupe longitudinale, est réalisé de manière courbée radialement vers l'extérieur ou vers l'intérieur.

13. Agencement d'étanchéité selon l'une quelconque des revendications 11 ou 12, **caractérisé en ce qu'**un tube de réception (5) saillant radialement vers l'extérieur est disposé dans la direction axiale entre les bourrelets d'étanchéité (11, 12).
